Europäisches Patentamt

European Patent Office

Office européen des brevets

(19)

(11) Veröffentlichungsnummer: **0 194 332**
**A1**

(12) # EUROPÄISCHE PATENTANMELDUNG

(21) Anmeldenummer: **85102980.1**

(22) Anmeldetag: **15.03.85**

(51) Int. Cl.⁴: **D 21 B 1/32**
**D 21 D 5/06**

(43) Veröffentlichungstag der Anmeldung:
**17.09.86** Patentblatt **86/38**

(84) Benannte Vertragsstaaten:
**AT BE CH DE FR GB IT LI LU NL SE**

(71) Anmelder: **Hermann Finckh Maschinenfabrik GmbH & Co.**
**Marktstrasse 185**
**D-7417 Pfullingen(DE)**

(72) Erfinder: **Czerwoniak, Erich**
**Häglenstrasse 39**
**D-7417 Pfullingen 1(DE)**

(74) Vertreter: **Hoeger, Stellrecht & Partner**
**Uhlandstrasse 14c**
**D-7000 Stuttgart 1(DE)**

(54) **Verfahren und Anlage zum Sortieren einer Faserstoffsuspension.**

(57) Anlage zum Sortieren einer aus Altpapier hergestellten Faserstoffsuspension mit einer liegenden, an beiden Enden offenen Sortiertrommel (14) mit perforiertem Mantel (58), einer unter der Sortiertrommel (14) angeordneten Gutstoffbütte (54) und einer Waschwasser-Zuführvorrichtung (100), bei der zur Vermeidung einer Verdünnung des Gutstoffs durch das dem Auswaschen brauchbarer Fasern aus dem Spuckstoff dienende Waschwasser das Waschwasser-Faser-Gemisch getrennt vom Gutstoff aufgefangen und der zu sortierenden Faserstoffsuspension wieder zugeführt wird.

EP 0 194 332 A1

./...

Croydon Printing Company Ltd

Fig.1

HOEGER, STELLRECHT & PARTNER 0194332

P A T E N T A N W Ä L T E

UHLANDSTRASSE 14 c · D 7000 STUTTGART 1

A 0330 b
b - 93
20. 2. 1985

Anm.: Hermann Finckh
Maschinenfabrik GmbH & Co.
Marktstraße 185
7417 Pfullingen

- A -

Verfahren und Anlage zum Sortieren
einer Faserstoffsuspension

Die Erfindung betrifft ein Verfahren zum Sortieren
einer aus Altpapier hergestellten Faserstoffsuspension mittels einer um eine liegende Achse rotierenden Sortiertrommel mit einem Sieböffnungen aufweisenden Mantel, in die an ihrem einen, ersten
Ende die zu sortierende Faserstoffsuspension eingeleitet, aus der durch die Sieböffnungen Gutstoff
abgeleitet, in die ferner zum Auswaschen brauchbarer Fasern aus dem in einem mit Sieböffnungen versehenen Auswaschbereich der Trommel verbliebenen
Stoff Waschwasser eingeführt und aus der schließlich der Spuckstoff durch das zweite Trommelende
abgeleitet wird. Ferner befaßt sich die Erfindung
mit einer Anlage zur Durchführung eines derartigen
Verfahrens, die eine um eine liegende Achse antreibbare, an beiden Enden offene Sortiertrommel mit
perforiertem Mantel, eine unter der Sortiertrommel
angeordnete Gutstoffbütte und eine Waschwasser-
zuführvorrichtung aufweist.

A 0330 b
b - 93
20. 2. 1985                           - 1a -

Es ist bekannt, zum Sortieren eines Faserbreis, der
durch Auflösen von Altpapier in einer Einweichtrommel
oder einem anderen Auflösegerät gewonnen wurde, eine
sogenannte Sortiertrommel zu verwenden, bei der es
sich um einen hohlen, an seinen beiden Enden offenen
und um eine gegenüber der Horizontalen leicht geneigte Achse antreibbaren Zylinder handelt, dessen
Mantel in einer ersten, an die Einführöffnung der
Sortiertrommel angrenzenden Zone geschlossen und im
übrigen perforiert, d. h. mit Sieböffnungen versehen
ist. Eine solche Sortiertrommel erlaubt es, energiesparend und kontinuierlich brauchbare Fasern von
Verunreinigungen zu trennen.

Bei einer bekannten, von der Anmelderin auf den Markt
gebrachten Anlage der vorstehend erwähnten Art wird
der durch das Auflösen des Altpapiers gewonnene Faserbrei zunächst in einem Mischer mit Wasser verdünnt
und dann in die Sortiertrommel eingeleitet. Deren
erste, einen geschlossenen Mantel aufweisende Zone
dient als Mischzone, um so eine möglichst homogene
Faserstoffsuspension zu erzeugen, die infolge der
leichten Neigung der Trommelachse in Richtung zum
auslaßseitigen Trommelende über einen Überlaufring
hingwegfließt, der zwischen der Mischzone und dem
übrigen, mit einem perforierten Mantel versehenen
Teil der Sortiertrommel angeordnet ist und die
Form einer an den Trommelmantel anschließenden, eine
Durchlaßöffnung aufweisenden Trennwand besitzt. Bei
der bekannten Anlage verläuft über dem gesamten perforierten Teil der Sortiertrommel ein Spritzrohr, durch das das von dem Trommelmantel gebildete Sieb
gereinigt wird und brauchbare Fasern aus dem
Spuckstoff ausgewaschen werden, ehe dieser die
Sortiertrommel über deren anderes Ende verläßt.
Der die Sortiertrommel über die Sieböffnungen verlassende Gutstoff und das die ausgewaschenen Fasern
mit sich führende Waschwasser gelangen in die unter
dem perforierten Bereich der Sortiertrommel stehende
Gutstoffbütte.

Die in der Gutstoffbütte anfallende, weiterzuverarbeitende Faserstoffsuspension sollte eine möglichst
hohe Stoffdichte aufweisen, da die weiteren, im
Zuge der Papierherstellung durchzuführenden Verfahrensschritte sonst eine zusätzliche Eindickung
der Faserstoffsuspension erforderlich machen. Da
die Stoffdichte der der Sortiertrommel zugeführten
Faserstoffsuspension durch das Waschwasser jedoch
herabgesetzt wird, muß die Stoffdichte der in die
Sortiertrommel eingeleiteten Faserstoffsuspension
wesentlich größer sein als die von der in der Gutstoffbütte gesammelten Faserstoffsuspension zu
fördernde Stoffdichte. Deshalb müssen in den bekannten Anlagen der eingangs erwähnten Art die
Sortiertrommeln relativ große Sieböffnungen aufweisen, um der relativ hohen Stoffdichte der in
die Sortiertrommel eingeleiteten Faserstoffsuspension Rechnung zu tragen und zu vermeiden, daß
am anderen Ende der Sortiertrommel zusammen mit
dem Spuckstoff größere Anteile noch brauchbarer
Fasern ausgetragen werden. Die Sortierfeinheit der
Sortiertrommeln dieser bekannten Anlagen ist also verhältnismäßig unbefriedigend.

Hier setzt nun die Erfindung ein, welcher die Aufgabe zugrunde lag, das bekannte Verfahren der eingangs erwähnten Art so zu verbessern, daß sich mit
ihm auch Faserstoffsuspensionen mit einer Stoffdichte von mindestens ca. 4 % mit relativ kleinen
Sieböffnungen sortieren lassen, ohne daß nennenswerte Mengen brauchbarer Fasern zusammen mit dem
Spuckstoff die Sortiertrommel verlassen. Erfindungsgemäß läßt sich diese Aufgabe dadurch lösen, daß
das aus den Sieböffnungen des Auswaschbereichs der
Sortiertrommel abfliessende Waschwasser-Faser-
Gemisch getrennt aufgefangen und der zu sortierenden
Faserstoffsuspension zugeführt wird. Bei dem erfindungsgemäßen Verfahren wird also so vorgegangen,
daß die zu sortierende Faserstoffsuspension mit
einer Stoffdichte, die bereits ungefähr der Stoffdichte des gewünschten Gutstoffs entspricht, in
die Sortiertrommel eingeleitet wird, und daß der
aus dem ersten perforierten Bereich der Sortiertrommel abfliessende Gutstoff getrennt von dem
aus dem zweiten perforierten Bereich der Sortiertrommel abfliessenden Waschwasser-Faser-Gemisch aufgefangen wird, um so eine Verdünnung des Gutstoffs
durch das Waschwasser zu vermeiden, und daß das
Waschwasser-Faser-Gemisch dazu verwendet wird, den
vom Auflösevorgang des Altpapiers angelieferten
Faserbrei so zu verdünnen, daß sich eine sortierfähige Faserstoffsuspension ergibt. Wird der erste
perforierte Bereich der Sortiertrommel, aus dem der

- 8 -

Gutstoff in die Gutstoffbütte abläuft, mittels eines
auf der Außenseite der Sortiertrommel angeordneten
Spritzrohrs kontinuierlich gereinigt, so tritt zwar
eine gewissen Verdünnung der Faserstoffsuspension
ein, so daß die Stoffdichte der in der Gutstoffbütte aufgefangenen Faserstoffsuspension etwas unterhalb der Stoffdichte der in die Sortiertrommel eingeleiteten Faserstoffsuspension liegt, jedoch kann
dieser Verdünnungseffekt bei den vorstehend angestellten Betrachtungen vernachlässigt werden, weil
für die Reinigung der Sieböffnungen der Sortiertrommel weit weniger Wasser benötigt wird als für
das Auswaschen brauchbarer Fasern aus dem Spuckstoff.

Bei einer bevorzugten Ausführungsform des erfindungsgemäßen Verfahrens werden die zu sortierende Faserstoffsuspension und das Waschwasser-Faser-Gemisch
vor der Sortiertrommel gemischt, es wäre aber auch
denkbar, bei Verwendung einer eine Mischzone aufweisenden Sortiertrommel das Waschwasser-Faser-Gemisch
in die Sortiertrommel einzuleiten und es in deren
Mischzone mit der zu sortierenden Faserstoffsuspension zu mischen. Die erste Alternative empfiehlt sich
deshalb, weil dann der vom Auflösevorgang kommende
Faserbrei in einem Schritt mit dem ohnehin zuzuführenden Verdünnungswasser und mit dem Waschwasser-
Faser-Gemisch gemischt werden kann.

Um eine zusätzliche Eindickung des Gutstoffs zu vermeiden, wird der zu sortierenden Faserstoffsuspension
außer dem Waschwasser-Faser-Gemisch nur so viel Ver-

A 0330 b
b - 93
20. 2. 1985

-5-

dünnungswasser zugemischt, daß die Stoffdichte des
Gemischs mindestens ungefähr 4 % beträgt.

Eine Anlage der eingangs erwähnten Art zur Durchführung des erfindungsgemäßen Verfahrens wird
zweckmäßigerweise so gestaltet, daß die Sortiertrommel hinter einer ersten perforierten Sortierzone eine perforierte Auswaschzone aufweist, daß
die Gutstoffbütte unter der Sortierzone und eine
zweite Bütte unter der Auswaschzone angeordnet
wird, und daß eine Rückführleitung von der zweiten
Bütte zurück vor die Auswaschzone führt. Natürlich
können die Gutstoffbütte und die zweite Bütte von
einem einzigen, mit einer Trennwand versehenen
Behälter gebildet werden.

Um den zunächst aus der Sortiertrommel abfliessenden
Gutstoff und das Waschwasser-Faser-Gemisch möglichst
vollständig voneinander zu trennen, empfiehlt es
sich, in der Sortiertrommel zwischen der Sortier-
und der Auswaschzone eine an den Trommelmantel anschliessende, eine Durchlaßöffnung aufweisende
Trennwand nach Art eines Ringstegs vorzusehen, über
den der Spuckstoff mit den noch an ihm anhaftenden
Fasern infolge der Drehung der Sortiertrommel und
der Neigung der Trommelachse hinwegbefördert wird.

Bei einer bevorzugten Ausführungsform der erfindungsgemäßen Anlage ist vor der Sortiertrommel
ein Mischer angeordnet, an den die Rückführleitung
und eine Verdünnungswasserleitung angeschlossen
sind.

- 10 -

- 6 -

Zur Reinigung der Sieböffnungen und zum Auswaschen
brauchbarer Fasern aus dem Spuckstoff ordnet man
zweckmäßigerweise über der Sortierzone und über
der Auswaschzone ein Spritzrohr an; für jede
Zone können ein oder mehrere Spritzrohre vorgesehen werden, es ist aber auch möglich, ein einziges
Spritzrohr sowohl über die Sortierzone als auch
über die Auswaschzone verlaufen zu lassen. Ferner
empfehlen sich Mittel zur getrennten Einstellung
der Spritzwassermengen für die Sortier- und für
die Auswaschzone. Erstreckt sich ein Spritzrohr
über beide Zonen hinweg, lassen sich unterschiedliche Spritzwassermengen z. B. durch unterschiedliche Rohr- und/oder Spritzöffnungsquerschnitte
erzielen, zu bevorzugen sind jedoch getrennte
Spritzrohre für Sortierzone und Auswaschzone, wobei den Spritzrohren Ventile zur Einstellung der
Spritzwassermengen zugeordnet sind.

Um zu vermeiden, daß Sand und andere schwere Teilchen zusammen mit dem Waschwasser-Faser-Gemisch
wieder der zu sortierenden Faserstoffsuspension
zugeführt werden und sich so immer mehr anreichern,
wird empfohlen, in der Rückführleitung eine Vorrichtung zur Abscheidung spezifisch schwerer Teilchen vorzusehen. Derartige Geräte sind bekannt
(z.B. Low Density Cleaner DR 3000 der Fa. Escher-
Wyss, Ravensburg).
Weitere Merkmale, Vorteile und Einzelheiten der
Erfindung ergeben sich aus den beigefügten Ansprüchen
und/oder aus der nachfolgenden Beschreibung sowie der beigefügten zeichnerischen Darstellung einer
bevorzugten Ausführungsform der erfindungsgemäßen
Anlage; in der Zeichnung zeigen:

Fig. 1    eine schematische Darstellung der Anlage;

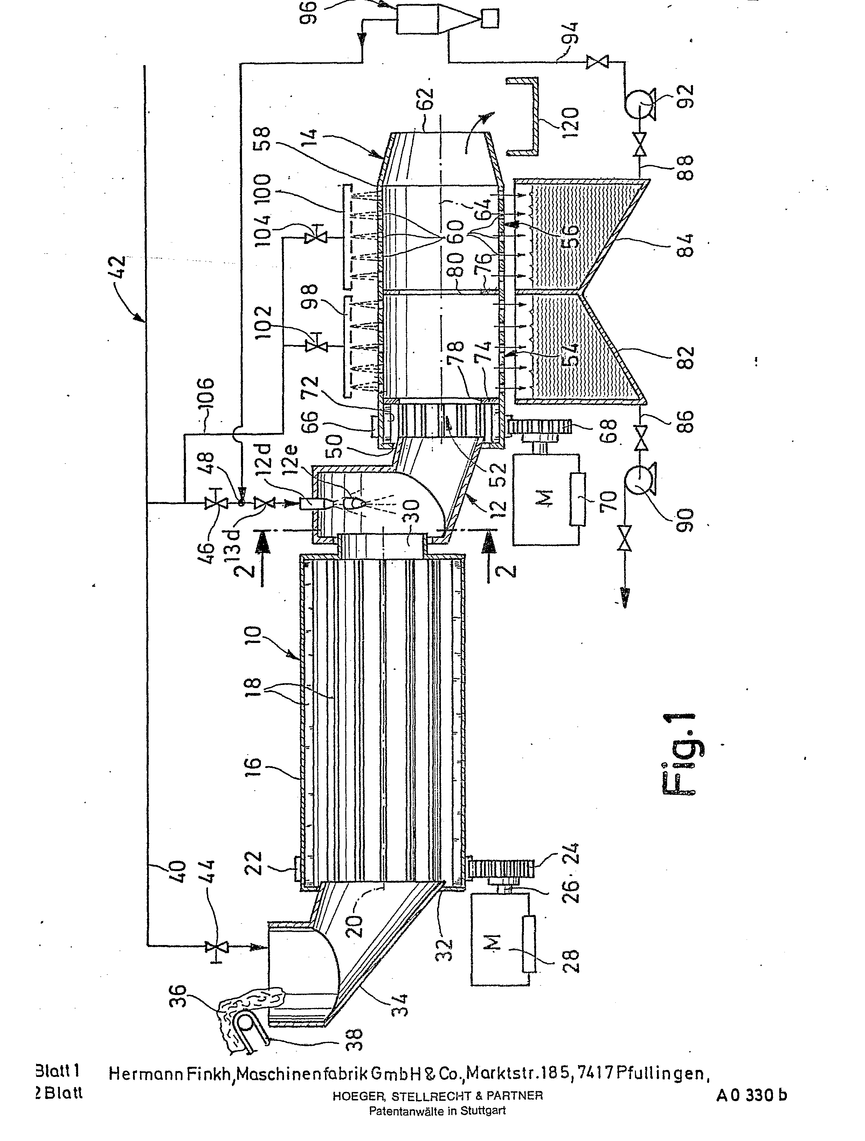

Fig. 2    eine schematische Darstellung des der Sortiertrommel dieser Anlage vorgeschalteten
          Mischers in einem Schnitt nach der Linie 2-2 in
          Fig. 1, und

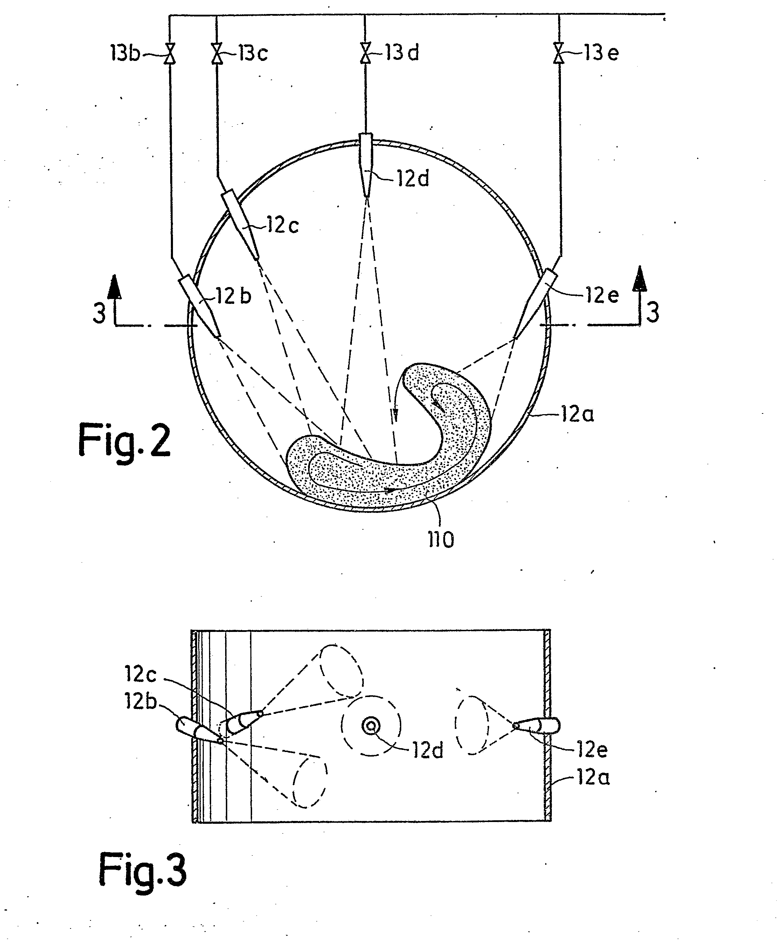

Fig. 3    einen Schnitt nach der Linie 3-3 in Figur 2.

Die in Fig. 1 gezeigte Anlage besteht im wesentlichen aus einer Einweichtrommel 10, einem Mischer
12 und einer Sortiertrommel 14. Die Einweichtrommel
10 besitzt einen geschlossenen Mantel 16, an dessen
Innenseite Mitnahmeleisten 18 angebracht sind. Sie
ist vorn und hinten, d. h. links und rechts, offen
und läßt sich um eine horizontale oder gemäß Fig. 1
leicht nach rechts geneigte Achse 20 in Drehung
versetzen. Hierzu sind nicht dargestellte Lager
vorgesehen, z. B. rechts und links angeordnete
Walzenpaare, auf denen die Einweichtrommel 10 mit
ihrem Mantel 16 ruht; außerdem ist auf der Außenseite der Einweichtrommel 10 ein Zahnkranz 22 befestigt, der mit einem Antriebsritzel 24 auf der
Welle 26 eines Motors 28 im Eingriff steht. An
ihrem rechten Ende besitzt die Einweichtrommel 10
einen Stutzen 30, mit dem sie in den in Fig. 2
gezeigten Mischer 12 hineinragt, während in eine
Öffnung 32 am linken Ende der Einweichtrommel 10
ein Einfülltrichter 34 hineinragt, welcher stationär

- 8 -

vor der Einweichtrommel angeordnet und oben offen
ist. In ihn wird das einzuweichende und aufzulösende Altpapier 36 mittels eines Förderbands 38 eingeführt. Außerdem führt in den Einfülltrichter ein
Zweig 40 einer Wasserleitung 42, so daß sich mit
Hilfe eines im Leitungszweig 40 befindlichen Ventils
44 die Menge des Einweichwassers zumessen läßt, die
zusammen mit dem Altpapier durch den Einfülltrichter
34 hindurch in die Einweichtrommel 10 gelangt.

Auch zu dem stationär angebrachten Mischer 12 führt
ein mit einem Ventil 46 versehener Zweig 48 der
Wasserleitung 42, um den über den Stutzen 30 angeförderten, in der Einweichtrommel 10 hergestellten
Faserbrei verdünnen zu können, und der Mischer ragt
mit einem Stutzen in eine Einführöffnung 50 am
linken Ende der Sortiertrommel 14 hinein. Die letztere
besitzt eine Mischzone 52, eine Sortierzone 54 und
eine Auswaschzone 56, wobei der Mantel 58 der Sortiertrommel 14 in der Mischzone geschlossen und in der
Sortierzone sowie der Auswaschzone 54 bzw. 56 mit
Sieböffnungen 60 versehen ist. Am rechten Ende besitzt die Sortiertrommel eine Auslaßöffnung 62.

Die Achse 64 der Sortiertrommel 14 ist vorzugsweise
nach rechts, d. h. in Durchlaufrichtung des eingeweichten, aufgelösten und verdünnten Faserstoffs,
leicht geneigt. Damit die Sortiertrommel 14 um die
Achse 64 gedreht werden kann, ist sie in gleicher,
nicht dargestellter Weise wie die Einweichtrommel 10 drehbar gelagert und besitzt einen Zahnkranz 66,
welcher mit einem Antriebsritzel 68 eines Motors
70 im Eingriff steht.

Es empfiehlt sich, mindestens in der Mischzone 52
auf der Innenseite des Trommelmantels Mitnahmeleisten 72 anzubringen und zwischen den drei Zonen
52, 54 und 56 sogenannte Überlaufringe am Trommelmantel 58 zu befestigen, die die Form von Trennwänden 74 bzs. 76 mit jeweils einer Durchlaßöffnung
78 bzw. 80 aufweisen.

Unter der Sortierzone 54 steht eine Gutstoffbütte
82, unter der Auswaschzone 56 eine Waschwasserbütte 84; beide sind mit Auslaßleitungen 86 bzw.
88 versehen, die jeweils zu einer Pumpe 90 bzw. 92
führen. Die Pumpe 90 fördert den Gutstoff zur Weiterverarbeitung, während an die Pumpe 92 eine Rückführleitung 94 angeschlossen ist, in der sich ein
bekannter Schwerteileabscheider 96 befindet und
die zum Mischer 12 führt. Bei dem Schwerteileabscheider 96 kann es sich um das Gerät

der Firma Hermann Finckh Maschinenfabrik GmbH & Co.
handeln.

Über der Sortierzone 54 und der Auswaschzone 56
ist jeweils ein Spritzrohr 98 bzw. 100 angeordnet;
das erste Spritzrohr 98 ist über ein Ventil 102,
das zweite Spritzrohr 100 über ein Ventil 104 an
einen Zweig 106 der Wasserleitung 42 angeschlossen.

- 10 -

Da die Ausbildung des Mischers 12 nicht Gegenstand
der Erfindung ist, soll nun zunächst die Funktion
der in Fig. 1 gezeigten Anlage näher erläutert
werden.

In der Einweichtrommel 10 wird das Altpapier 36
mit dem über den Leitungszweig 40 zugeführten Wasser
vermischt und dabei eingeweicht, worauf es infolge
eines fortfwährenden Anhebens mit Hilfe der Mitnahmeleisten 18 und eines anschließenden Herabfallens oder Herabgleitens aufgelöst und in einen
Faserbrei aufgelöst wird. Dabei kann es zweckmäßig
sein, dem Wasser noch Chemikalien beizumischen,
durch die der Auflösevorgang begünstigt und das
Altpapier gebleicht wird. Infolge der Neigung der
Trommelachse 20 und der Mitnahmeleisten 18 wird
das Altpapier bzw. der Faserbrei langsam von links
nach rechts durch die Einweichtrommel 10 hindurchtransportiert und dann durch den Stutzen 30 hindurch
in den Mischer 12 überführt. Natürlich muß der
Innendurchmesser des Stutzens 30 entsprechend dem
gewünschten Füllgrad der Einweichtrommel 10 gewählt werden.

Der Mischer 12 dient dazu, den Faserbrei zu verdünnen und die Stoffdichte (Anteil der Feststoffe
in Gewichtsprozent) so weit herabzusetzen und dabei
gleichzeitig die Fasern im Wasser zu suspendieren,
daß eine sortierfähige Faserstoffsuspension entsteht. Der Misch- und Suspensionsvorgang wird
zweckmäßigerweise in der Mischzone 52 der Sortier-

- 15 -

A 0330 b
b - 93
20. 2. 1985

-14-

trommel 14 fortgesetzt.

Infolge der Drehung der Sortiertrommel 14, der
Neigung ihrer Achse 64 und der Mitnahmeleisten 72
wird die Faserstoffsuspension kontinuierlich durch
die Durchlaßöffnung 78 hindurch in die Sortierzone 54 gefördert, wo brauchbare Fasern zusammen
mit Wasser durch die Sieböffnungen 60 hindurch in
die Gutstoffbütte 82 abfliessen. Mit Hilfe des
ersten Spritzrohrs 98 werden die Sieböffnungen 60
der rotierenden Sortiertrommel laufend gereinigt.

In Abhängigkeit vom Füllgrad der Sortiertrommel 14
kann es zweckmäßig sein, den Mitnahmeleisten 72
entsprechende Mitnahmeleisten auch in der Sortierzone 54 und in der Auswaschzone 56 anzubringen.

Der sogenannte Spuckstoff, d. h. derjenige Anteil
des aufgelösten Altpapiers, der in der Sortierzone
54 die Sieböffnungen 60 nicht passiert, gelangt
durch die Durchlaßöffnung 80 hindurch in die Auswaschzone 56, in der mit Hilfe des zweiten Spritzrohrs 100 brauchbare Fasern von den Verunreinigungen
wie Metall- und Kunststoffteilen abgespült werden,
so daß sie zusammen mit dem durch das Spritzrohr
100 in die Sortiertrommel 14 eingeführten Waschwasser über die Sieböffnungen 60 in die Waschwasserbütte 84 abfliessen. Der in der Sortiertrommel 14
zurückbleibende Spuckstoff wird über die Auslaßöffnung 62 aus der Sortiertrommel 14 hinausgefördert
und fällt in einen Abfallbehälter 120.

Das sich in der Waschwasserbütte 84 sammelnde
Waschwasser-Faser-Gemisch wird in die Rückführleitung 94 gepumpt, durch den Schwerteileabscheider
96 von spezifisch schwerem Schmutz wie Sand und
dergleichen befreit und dann in  den Mischer 12
geleitet, so daß das eine niedere Stoffdichte
aufweisende Waschwasser-Faser-Gemisch zusammen mit
dem über den Leitungszweig 48 zugeführten Wasser
zur Verdünnung des durch die Einweichtrommel 10
angelieferten Faserbreis verwendet wird.

Bei dem erfindungsgemäßen Verfahren führt das dem
Auswaschbereich des Sortiergeräts zugeführte Waschwasser also nicht zu einer weiteren Verdünnung des
aus der Sortierzone des Sortiergeräts abfliessenden
Gutstoffs, sondern das zum Auswaschen brauchbarer
Fasern aus dem beim Sortiervorgang anfallenden
Spuckstoff benötigte Waschwasser wird gesondert
von dem beim Sortiervorgang anfallenden Gutstoff
gesammelt und zusammen mit den im Waschwasser enthaltenen Fasern der zu sortierenden Faserstoffsuspension zugeführt, so daß das Waschwasser den
Gutstoff nicht zusätzlich verdünnt, sondern bei der
Verdünnung des sich aus dem Auflösevorgang ergebenden Faserbreis eingesetzt werden kann. Soll der
aus der Sortierzone des Sortiergeräts abfliessende
Gutstoff eine bestimmte Mindeststoffdichte aufweisen, um den Gutstoff nicht zusätzlich eindicken
zu müssen, erlaubt es das erfindungsgemäße Verfahren demnach, der Sortierzone des Sortiergeräts
eine Faserstoffsuspension geringerer Stoffdichte zuzuführen, als dies beim Stand der Technik der
Fall war. Damit ist die Voraussetzung für eine
größere Sortierfeinheit geschaffen,   d. h. für
die Verwendung kleinerer Sieböffnungen 60 - je
größer die Stoffdichte der zu sortierenden Faserstoffsuspension ist, um so größer müssen die
Sieböffnungen dimensioniert werden, um zu vermeiden, daß zusammen mit dem Spuckstoff ein verhältnismäßig hoher Anteil brauchbarer Fasern das
Sortiergerät verläßt.

Aus der vorstehenden Beschreibung wird ersichtlich, daß es sich bei dem Sortiergerät nicht unbedingt um eine Sortiertrommel handeln muß, denn
das erfindungsgemäße Grundkonzept ließe sich auch
bei einem anderen Sortiergerät wie beispielsweise
einem sogenannten Wuchtschüttler (Jonson-Screen)
anwenden, wenn unterhalb des Siebs Gutstoff und
Waschwasser gesondert aufgefangen werden.

Im folgenden soll nun ein Beispiels des erfindungsgemäßen Verfahrens erläutert werden.

Es sei angenommen, daß mit der erfindungsgemäßen
Anlage 100 to Altpapier pro 24 Stunden verarbeitet
werden sollen, und zwar natürlich nicht chargenweise, sondern kontinuierlich. Diesem Altpapier
wird für den Einweich- und Auflösevorgang, welcher
in der Einweichtrommel 10 durchgeführt wird, so
viel Wasser zugesetzt, daß sich eine Stoffdichte
von 15 % ergibt. Dann verlassen 463 l/min des durch das Einweichen und Auflösen gewonnenen Faserbreis
die Einweichtrommel 10. Dem Mischer 12 werden pro
Minute 473 l Wasser über den Leitungszweig 48 und
500 l Waschwasser-Faser-Gemisch über die Rückführleitung 94 zugeführt und im Mischer mit dem
aus der Einweichtrommel 10 angeförderten Faserbrei
vermischt, so daß sich im Mischer 12 eine Stoffdichte von 4,8 % ergibt. Der Mischer 12 speist dann
1436 l/min der von ihm erzeugten Faserstoffsuspension in die Sortiertrommel 14 ein. Aus dem ersten
Spritzrohr 98 gelangen pro Minute 300 l Spritzwasser
in die Sortierzone 54 der Sortiertrommel 14, und
wenn man die verhältnismäßig geringe, in der Auswaschzone 56 ausgewaschene Fasermenge sowie die
Masse des die Sortiertrommel 14 durch die Auslaßöffnung 62 verlassenden Spuckstoffs vernachlässigt,
fliessen aus der Sortierzone 54 in 24 Stunden 100 to
Fasermaterial mit einer Stoffdichte von 4 %, d. h.
1736 l Faserstoffsuspension pro Minute, in die Gutstoffbütte 82. Über das zweite Spritzrohr 100
werden 500 l Waschwasser pro Minute in die Auswaschzone 56 der Sortiertrommel 14 eingeführt, die
vollständig über die Rückführleitung 94 in den
Mischer 12 gepumpt werden.

Im folgenden soll nun anhand der Fig. 2 der Aufbau
des Mischers 12 kurz beschrieben werden.

A 0330 b
b-201
28.02.1985

-K-

In ein Gehäuse 12a des Mischers sind mehrere
Düsen 12b, 12c, 12d, 12e
eingesetzt, aus denen die über die Wasserleitung 42 und
die Rückführleitung 94 angeförderte Flüssigkeit unter
hohem Druck in das Innere des Mischers gespritzt wird.
Die Verteilung der Flüssigkeit auf die Ventile lässt
sich mittels Ventilen 13b, 13c, 13d, 13e einstellen.
Die Düsen sind so orientiert, dass der von der Einweichtrommel 10 in den Mischer 12 geförderte Faserbrei
bzw. die bei seiner Verdünnung entstehende Fasersuspension, der bzw. die in Fig. 2 mit dem Bezugszeichen 110
bezeichnet wurde, eine in Fig. 2 mit Pfeilen angedeutete
Zirkulationsbewegung durchführt, die eine gute Durchmischung und so das Entstehen einer sortierfähigen
Fasersuspension zur Folge hat. Durch die in Figur 3
erkennbaren besonderen Richtungen der Düsen wird eine
äusserst wirkungsvolle Durchmischung des mit einer
Stoffdichte von ca. 15-20 % angelieferten Faserbreis
mit dem Verdünnungswasser erreicht, um eine sortierfähige Fasersuspension mit einer Stoffdichte von
ca. 5 % zu erreichen.

A 0330 b
b - 93
20. 2. 1985

Anm.: Hermann Finckh
Maschinenfabrik GmbH & Co.
Marktstraße 185
7417 Pfullingen

P a t e n t a n s p r ü c h e :

1. Verfahren zum Sortieren einer aus Altpapier hergestellten Faserstoffsuspension mittels einer um eine
liegende Achse rotierenden Sortiertrommel mit einem
Sieböffnungen aufweisenden Mantel, in die an ihrem
einen, ersten Ende die zu sortierende Faserstoffsuspension eingeleitet, aus der durch die Sieböffnungen Gutstoff abgeleitet, in die ferner zum Auswaschen brauchbarer Fasern aus dem in einem mit
Sieböffnungen versehenen Auswaschbereich der Trommel
verbliebenen Stoff Waschwasser eingeführt und aus
der schließlich der Spuckstoff durch das zweite
Trommelende abgeleitet wird, dadurch gekennzeichnet,
daß das aus den Sieböffnungen des Auswaschbereichs
abfliessende Waschwasser-Faser-Gemisch getrennt
aufgefangen und der zu sortierenden Faserstoffsuspension zugeführt wird.

2. Verfahren nach Anspruch 2, dadurch gekennzeichnet,
daß das Waschwasser-Faser-Gemisch mit der zu
sortierenden Faserstoffsuspension gemischt wird.

- 2 -

3. Verfahren nach Anspruch 2, dadurch gekennzeichnet,
   daß die zu sortierende Faserstoffsuspension mit
   Verdünnungswasser sowie mit dem Waschwasser-Faser-
   Gemisch gemischt wird.

4. Verfahren nach Anspruch 3, dadurch gekennzeichnet,
   daß der zu sortierenden Faserstoffsuspension außer
   dem Waschwasser-Faser-Gemisch nur so viel Verdünnungswasser zugemischt wird, daß die Stoffdichte des Gemischs mindestens ungefähr 4 % beträgt.

5. Anlage zur Durchführung des Verfahrens nach Anspruch
   1, mit einer um eine liegende Achse antreibbaren,
   an beiden Enden offenen Sortiertrommel mit perforiertem Mantel, einer unter der Sortiertrommel angeordneten Gutstoffbütte und einer Waschwasser-Zuführvorrichtung, dadurch gekennzeichnet, daß die Sortiertrommel hinter einer ersten perforierten Sortierzone
   eine perforierte Auswaschzone aufweist, daß die
   Gutstoffbütte unter der Sortierzone und eine zweite
   Bütte unter der Auswaschzone angeordnet ist und daß
   eine Rückführleitung von der zweiten Bütte zurück
   vor die Auswaschzone führt.

6. Anlage nach Anspruch 5, dadurch gekennzeichnet, daß
   in der Sortiertrommel zwischen der Sortier- und der
   Auswaschzone eine an den Trommelmantel anschliessende,
   eine Durchlaßöffnung aufweisende Trennwand vorgesehen
   ist.

A 0330 b
b - 93
20. 2. 1985 — 3 —

7. Anlage nach Anspruch 5 oder 6, gekennzeichnet durch einen vor der Sortiertrommel angeordneten Mischer, an den die Rückführleitung und eine Verdünnungswasserleitung angeschlossen sind.

8. Anlage nach einem oder mehreren der Ansprüche 5 bis 7, dadurch gekennzeichnet, daß über der Sortierzone und der Auswaschzone ein Spritzrohr angeordnet ist.

9. Anlage nach Anspruch 8, gekennzeichnet durch Mittel zur getrennten Einstellung der Spritzwassermengen für Sortier- und Auswaschzone.

10. Anlage nach einem oder mehreren der Ansprüche 5 bis 9, dadurch gekennzeichnet, daß in der Rückführleitung eine Vorrichtung zur Abscheidung spezifisch schwerer Teilchen vorgesehen ist.

11. Anlage nach einem oder mehreren der Ansprüche 5 bis 10, dadurch gekennzeichnet, daß die Sortiertrommel vor der Sortierzone eine Mischzone mit geschlossenem Trommelmantel aufweist.

12. Anlage nach Anspruch 11, dadurch gekennzeichnet, daß in der Sortiertrommel zwischen der Misch- und der Sortierzone eine an den Trommelmantel anschliessende, eine Durchlaßöffnung aufweisende Trennwand vorgesehen ist.

— 4 —

Fig.1

Blatt 1
2 Blatt

Hermann Finkh, Maschinenfabrik GmbH & Co., Marktstr. 185, 7417 Pfullingen,

HOEGER, STELLRECHT & PARTNER
Patentanwälte in Stuttgart

A 0 330 b

0194332

Fig.2

Fig.3

Europäisches Patentamt

**EUROPÄISCHER RECHERCHENBERICHT**

EP 85 10 2980

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| X | DE-A-2 651 198 (AHLSTRÖM) <br><br> * Insgesamt * | 1,2,5, 11 | D 21 B 1/32 <br> D 21 D 5/06 |
| A | | 7,8,12 | |
| | --- | | |
| A | DE-C-3 225 538 (VOITH) <br><br> * Insgesamt * | 1,3-7, 11,12 | |
| | --- | | |
| A | DE-C-3 221 788 (VOITH) | | |
| | --- | | |
| A | US-A-2 775 168 (BAXTER JR.) | | |
| | --- | | |
| A | US-A-2 899 064 (COWAN et al.) | | |
| | ----- | | |

| | | | RECHERCHIERTE SACHGEBIETE (Int. Cl.4) |
|---|---|---|---|
| | | | D 21 B <br> D 21 D |

Der vorliegende Recherchenbericht wurde für alle Patentansprüche erstellt.

| Recherchenort <br> DEN HAAG | Abschlußdatum der Recherche <br> 30-10-1985 | Prüfer <br> DE RIJCK F. |
|---|---|---|